# FASCICULE DE BREVET EUROPEEN

(11) **EP 1 062 750 B1**
(45) Date de publication et mention de la délivrance du brevet: **19.12.2001**
(21) Numéro de dépôt: 99939238.4
(22) Date de dépôt: 03.03.1999
(51) Int. Cl.: H04B 7/26

(54) **PROCEDE D'ETABLISSEMENT D'UNE COMMUNICATION RADIO**
VERFAHREN ZUM AUFBAU EINER FUNKVERBINDUNG
METHOD FOR SETTING UP A RADIO COMMUNICATION

(30) Priorité: 09.03.1998 FR 9802835
(43) Date de publication de la demande: 27.12.2000
(73) Titulaire: Retali, Dominique, 94170 Le Perreux (FR)
(72) Inventeur: Retali, Dominique, 94170 Le Perreux (FR)
(74) Mandataire: Fruchard, Guy
(86) Numéro de dépôt international: FR9900473
(87) Numéro de publication internationale: WO9946870

(56) Documents cités:
- EP-A- 0 777 399
- WO-A-94/28684

## Description

La présente invention concerne procédé d'établissement d'une communication radio entre un abonné itinérant implanté dans un véhicule et un abonné residant implanté au sol.

L'invention s'applique plus particulièrement, bien que non exclusivement, à l'établissement d'une communication entre les membres d'équipage d'un avion et le personnel au sol d'un aéroport où l'avion effectue une escale.

On sait que lorsqu'un avion arrive sur un site il est nécessaire pour les membres de l'équipage de rentrer en liaison avec le personnel au sol. La première communication à établir est celle assurant une liaison entre le pilote et le personnel de piste chargé de diriger l'avion vers son emplacement de stationnement. Les fréquences radio habituellement utilisées pour la communication avec la tour de contrôle étant généralement proches de la saturation, il ne peut être envisagé d'utiliser ces fréquences pour une communication avec le personnel au sol.

Faute de disposer de moyens appropriés à une communication radio, la communication entre le pilote et le personnel de piste est donc réalisée de façon optique par geste. Indépendamment des difficultés qu'une telle communication peut soulever dans certaines conditions météorologiques où la visibilité est mauvaise, il est nécessaire pour le personnel de piste de se trouver dans le champ de vision du pilote, ce qui constitue en soi une contrainte opérationnelle très importante.

Lorsque l'avion a atteint son emplacement de stationnement, il est connu d'établir une communication entre les agents de piste et l'équipage de l'avion en reliant un circuit de communication externe au circuit de communication interne de l'avion. Cette liaison est assurée par un fil et constitue encore une contrainte importante affectant la liberté de mouvement du personnel au sol.

Afin de pallier ces inconvénients, on a envisagé comme décrit notamment dans le document WO 94/28684, d'établir des communications entre les membres d'équipage d'un avion et le personnel au sol en utilisant les réseaux de radiocommunication existants permettant en particulier d'établir une communication entre des abonnés itinérants que sont les membres d'équipage de l'avion et des abonnés résidants que sont les membres du personnel au sol d'un aéroport, en particulier les agents de piste. Toutefois, en raison de la domiciliation des abonnés itinérants à un site d'attache, le coût de ces communications est élevé de sorte que ce système de communication n'est pas optimal.

Prenant en compte la mobilité apparente des abonnés itinérants, et l'immobilité apparente des abonnés résidants, il a également été envisagé de créer localement un réseau de radiocommunication comprenant une station de base portée par un abonné résidant et de considérer les avions comme des stations mobiles provisoirement associées à la station de base selon la liaison habituellement réalisée dans un réseau de radiocommunication classique entre une station mobile et une station de base. Toutefois il s'est révélé qu'une structure de ce type n'était pas adaptée à la mise en communication de plusieurs agents de piste avec un même avion, ce qu'il est cependant utile de pouvoir réaliser.

Selon l'invention, on propose un procédé d'établissement d'une communication radio entre au moins un abonné itinérant implanté dans un véhicule et au moins un abonné résidant implanté sur un site, le procédé comportant les étapes d'équiper le véhicule avec une station de base de radio communication apte à émettre un signal de balise identifiant la station de base et adapté à être perçu par une station mobile détenue par un abonné résidant, et d'assurer à au moins une station mobile une connexion avec la station de base.

Ainsi, par une inversion de la structure habituelle du réseau on donne à l'avion, ou d'une façon plus générale au véhicule portant la station de base, un rôle central par rapport aux communications envisagées, ce qui permet en particulier par une procédure d'identification unique de la station de base, de mettre en relation plusieurs abonnés itinérants avec les abonnés résidants lors de l'arrivée de l'avion sur un site.

Selon une version avantageuse de l'invention, le procédé comporte les étapes de détecter dans la station de base à l'arrivée du véhicule sur un site, des fenêtres de temps disponibles et émettre dans ces fenêtres de temps un signal représentatif d'une identité du véhicule de façon à se faire directement reconnaître par les stations mobiles présentes sur le site.

Ainsi, en s'assurant que l'identification du véhicule est effectuée dans une fenêtre de temps disponible, on permet à tous les abonnés résidants à l'écoute en portée convenable de déceler l'arrivée du véhicule, les différents véhicules présents sur le site pouvant ainsi être détectés et identifiés.

Pour la mise en oeuvre du procédé, l'identité du véhicule donnant lieu à émission d'un signal peut être une identité permanente (numéro d'immatriculation ou d'enregistrement du véhicule), ou une identité provisoire représentative de l'opération de transport (numéro de vol ou numéro de manifeste...), ou une association de ces types d'identité.

Selon encore un aspect avantageux de l'invention, le procédé comporte l'étape d'échanger les données d'annuaire entre la station de base et au moins une station mobile. Par données d'annuaire on entend non seulement le nom des abonnés mais aussi d'autres informations utiles pour l'établissement de communications telles que les organismes de rattachement ou les fonctions des abonnés. Les abonnés résidants et les abonnés itinérants sont ainsi respectivement informés des identifiants et numéros d'appel locaux de leurs interlocuteurs de sorte que des communications peuvent aisément être établies entres les abonnés itinérants et les abonnés résidants.

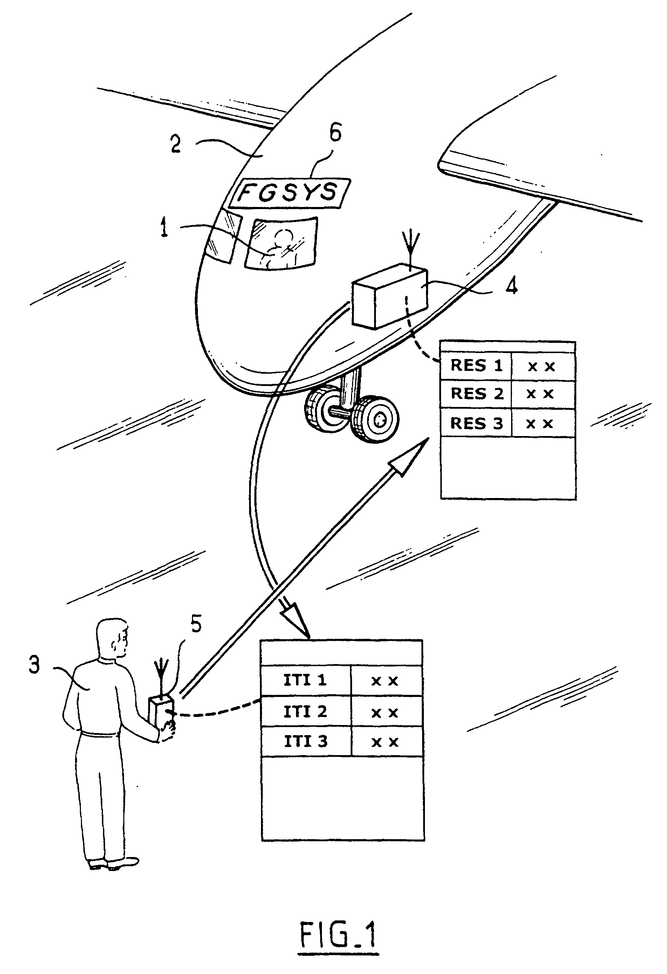

D'autres caractéristiques et avantages de l'invention apparaîtront encore à la lecture de la description qui suit d'un mode particulier du dispositif selon l'invention et d'un mode de mise en oeuvre particulier du procédé selon l'invention, en référence à la figure unique ci-jointe qui est une représentation schématique du dispositif de radiocommunication selon l'invention.

En référence à la figure, le dispositif de radiocommunication selon l'invention est décrit en relation avec des abonnés itinérants 1 membres de l'équipage d'un avion 2 et des abonnés résidants 3 membres du personnel au sol d'un site aéroportuaire sur lequel l'avion fait escale.

Selon l'invention, l'avion 2 est équipé d'une station de base 4 d'un système de radiocommunication tandis que les membres du personnel au sol 3 détiennent une station mobile 5 adaptée à communiquer avec la station de base 4. Les membres du personnel d'équipage 1 de l'avion 2 peuvent être reliés à la station de base 4 soit par une liaison avec fil soit par une liaison sans fil.

Afin de pouvoir établir des communications avec les abonnés résidants, il est nécessaire que la station de base se fasse connaître de ceux-ci. A cet effet, la station de base émet, comme dans un réseau de radiocommunication classique, un signal de balise qui permet aux stations mobiles de l'identifier. De préférence, l'identification de la station de base dans le signal de balise reprend l'identification de l'avion et/ou le numéro de vol éventuellement sous forme compressée dans le cas où le nombre de bits disponibles dans la trame du signal de balise n'est pas suffisant pour permettre une reprise telle quelle de l'identité complète de l'avion. L'identification de la station de base permet ainsi l'identification simultanée de l'avion ou du numéro de vol correspondant.

De façon classique, le réseau de radiocommunication selon l'invention fonctionne en partage de temps sur une ou plusieurs fréquences et comprend à cet effet une trame comportant des fenêtres de temps allouées de façon organisée aux stations mobiles et à la station de base pour l'émission des signaux de communication. Afin que l'arrivée d'un nouvel avion puisse être perçue par des abonnés résidants qui, chacun sont à l'écoute d'au moins un signal de balise émis par la station de base d'un avion déjà présent sur le site, on prévoit de détecter dans la station de base d'un avion arrivant sur ce site les fenêtres de temps qui sont déjà occupées par les stations de base d'avions déjà présents et d'émettre le signal de balise représentatif de l'identité de l'avion arrivant, préférentiellement dans une fenêtre de temps non simultanée à celles déjà utilisées par les avions déjà présents, à une fréquence utilisable par la station de base. Il est ainsi possible pour un abonné résidant d'être en relation simultanément avec plusieurs stations de base et donc de recevoir des appels de l'une quelconque de ces stations de base ou d'émettre des appels vers l'une de celles-ci.

Lorsque l'arrivée d'une station de base est détectée par une station mobile, l'abonné résidant correspondant a la possibilité de se connecter et l'on peut prévoir différents modes de mise en oeuvre pour assurer cette connexion. Selon un premier mode de mise en oeuvre réservé essentiellement au personnel de piste, on prévoit d'utiliser l'immatriculation de l'avion, soit qu'elle puisse être lue car apparaissant en grosses lettres sur la cellule de l'avion comme illustré par le cartouche 6 sur la figure, soit qu'elle soit connue a priori du personnel de piste. Dans ce cas on prévoit que la saisie des signes d'identification par un abonné résidant sur la station mobile qu'il détient le mette automatiquement en communication avec le pilote de l'avion. Afin qu'un chef d'équipe du personnel de piste puisse également intervenir dans la conversation on peut prévoir une mise en conférence automatique lorsque plusieurs stations mobiles sont mises en communication avec le même abonné itinérant.

Selon un second mode de mise en oeuvre qui peut d'ailleurs être combiné avec le premier mode de mise en oeuvre, la détection de l'arrivée d'une station de base sur un site par un abonné résidant provoque automatiquement l'émission vers cette station de bases de données d'annuaire des abonnés résidants, notées RES1 à RES3 sur la figure, et l'émission en retour vers au moins un abonné résidant de données d'annuaire relatives aux abonnés itinérants, notés ITI1 à ITI3 sur la figure. Les données d'annuaire comprennent de préférence non seulement le nom et le numéro d'appel des différents abonnés mais également leur fonction et l'organisme auquel ils sont rattachés. Il est alors possible pour un abonné de consulter l'annuaire dédié ainsi obtenu et d'appeler l'interlocuteur de son choix.

Afin de permettre une évolution de la situation, l'identification des avions présents sur le site est de préférence effectuée de façon périodique afin que des stations mobiles qui n'étaient pas initialement dans la zone de réception des signaux d'une station de base puissent par la suite se connecter à celle-ci.

Bien entendu l'invention n'est pas limitée aux modes de mise en oeuvre décrits et on peut y apporter des variantes de réalisation sans sortir du cadre de l'invention tel que défini par les revendications.

En particulier, les avions appartenant à une même compagnie aérienne étant généralement traités par une équipe d'agents au sol qui sont salariés de la compagnie, on peut prévoir certaines fonctions dédiées qui sont mises en oeuvre automatiquement lorsqu'un avion de cette compagnie arrive sur un site.

Bien que l'invention ait été décrite en relation avec un réseau comportant une station de base implantée de façon permanente dans chaque avion on peut prévoir de mettre en oeuvre le procédé de l'invention en montant de façon provisoire une station de base sur un avion après son arrivée sur le site et de démonter celle-ci juste avant le départ de l'avion.

## Revendications

1. Procédé d'établissement d'une communication radio entre au moins un abonné itinérant (1) implanté dans un véhicule (2) et au moins un abonné résidant (3) implanté sur un site, **caractérisé en ce qu'**il comporte les étapes d'équiper le véhicule avec une station de base (4) de radio communication apte à émettre un signal de balise identifiant la station de base (4) et adapté à être perçu par une station mobile (5) détenue par un abonné résidant (3), et d'assurer à au moins une station mobile (5) une connexion avec la station de base (4).

2. Procédé d'établissement d'une communication selon la revendication 1, **caractérisé en ce que** le signal de balise contient une identification du véhicule (2).

3. Procédé d'établissement d'une communication selon la revendication 1, **caractérisé en ce que** les stations mobiles (5) sont adaptées à percevoir plusieurs signaux de balise émis par différentes stations de base (4) et **en ce que** le procédé comporte en outre l'étape de sélectionner par une station mobile (5) au moins une station de base (4) avec laquelle une connexion est établie.

4. Procédé d'établissement d'une communication selon la revendication 1, **caractérisé en ce qu'**il comporte l'étape d'effectuer une mise en conférence automatique de plusieurs stations mobiles (5) en communication avec un abonné itinérant (1).

5. Procédé d'établissement d'une communication selon la revendication 1, **caractérisé en ce qu'**il comporte les étapes de détecter dans la station de base (4), à l'arrivée du véhicule (2) sur un site, des fenêtres de temps disponibles et émettre dans ces fenêtres de temps un signal représentatif d'une identité du véhicule (2) de façon à le faire reconnaître par les stations mobiles (5) présentes sur le site.

6. Procédé selon la revendication 1, **caractérisé en ce qu'**il comporte l'étape d'échanger des données d'annuaire entre la station de base (4) et au moins une station mobile (5).

## Patentansprüche

1. Verfahren zur Herstellung einer Funkverbindung zwischen mindestens einem reisenden Teilnehmer (1), der sich in einem Fahrzeug (2) befindet, und mindestens einem stationären Teilnehmer (3), der sich an einem Standort befindet, **dadurch gekennzeichnet, daß** es die Schritte umfaßt: Ausrüsten des Fahrzeuges mit einer Basisstation (4) für die Funkverbindung, die ein die Basisstation (4) identifizierendes Bakensignal aussenden kann, das durch eine von einem stationären Teilnehmer (3) gehaltene Mobilstation (5) empfangen werden kann, und Sicherstellen einer Verbindung von mindestens einer Mobilstation (5) mit der Basisstation (4).

2. Verfahren zur Herstellung einer Funkverbindung nach Anspruch 1, **dadurch gekennzeichnet, daß** das Bakensignal eine Kennung des Fahrzeuges (2) enthält.

3. Verfahren zur Herstellung einer Funkverbindung nach Anspruch 1, **dadurch gekennzeichnet, daß** die Mobilstationen (5) für einen Empfang der Bakensignale mehrerer Basisstationen (4) geeignet sind und daß das Verfahren ferner den Schritt umfasst, daß eine Mobilstation (5) mindestens eine Basisstation (4) auswählt, mit der eine Verbindung hergestellt wird.

4. Verfahren zum Herstellen einer Funkverbindung nach Anspruch 1, **gekennzeichnet durch** den Schritt, daß eine automatische Konferenzschaltung mehrerer Mobilstationen (5) mit einem reisenden Teilnehmer (1) hergestellt wird.

5. Verfahren zum Herstellen einer Funkverbindung nach Anspruch 1, **gekennzeichnet durch** die Schritte, daß in der Basisstation (4) bei Ankunft des Fahrzeugs (2) an einem Standort verfügbare Zeitfenster erfaßt werden und daß in diesen Zeitfenstern ein die Identität des Fahrzeuges (2) repräsentierendes Signal ausgesandt wird, so daß das Fahrzeug von den am Standort vorhandenen Mobilstationen (5) erkannt werden kann.

6. Verfahren nach Anspruch 1, **gekennzeichnet durch** den Schritt des Austausches von Adressverzeichnis zwischen der Basisstation (4) und mindestens einer Mobilstation (5).

## Claims

1. A process for establishing a communication between at least one itinerant subscriber (1) in a vehicle (2) and at least one resident subscriber (3) on a site, **characterised in that** it comprises the steps of providing the vehicle with a radio communication base station (4) adapted for emitting a beacon signal identifying the base station (4) and adapted to be perceived by a mobile station (5) possessed by a resident subscriber (3), and to establish at least at one mobile station (5) a communication with the base station (4).

2. A process for establishing a communication as set forth in claim 1 **characterised in that** the beacon signal includes an identification of the vehicle (2).

3. A process for establishing a communication as set forth in claim 1 **characterised in that** the mobile stations (5) are adapted to perceive several beacon signals emitted by various base stations (4) and **in that** the process further comprises the step of selecting by a mobile station (5) at least one base station (4) with which a connection is established.

4. A process for establishing a communication as set forth in claim 1 **characterised in that** it comprises the step of providing automatic conferencing of several mobile stations (5) in communication with an itinerant subscriber.

5. A process for establishing a communication as set forth in claim 1 **characterised in that** it comprises the steps of detecting in the base station (4), upon the arrival of the vehicle (2) on a site, available time windows and emitting in said time windows a signal representative of an identity of the vehicle (2) in order to make itself known to the mobile stations (5) present on the site.

6. A process for establishing a communication as set forth in claim 1 **characterised in that** it comprises the step of exchanging directory data between the base station (4) and at least.one mobile station (5).
